# EUROPEAN PATENT APPLICATION

(11) **EP 4 279 305 A1**
(43) Date of publication of application: **22.11.2023**
(21) Application number: 22202591.8
(22) Date of filing: 19.10.2022
(51) Int. Cl.: B60K 1/04, B60K 1/00, B60L 53/56, B60K 17/10, B60K 25/00

(54) **A CHARGING ARRANGEMENT AND A METHOD FOR CHARGING AN ELECTRICALLY POWERED WORKING MACHINE**

(71) Applicant: Volvo Construction Equipment AB, 631 85 Eskilstuna (SE)
(72) Inventor: KARAMI RAD, Meysam, 632 17 Eskilstuna (SE)
(74) Representative: Valea AB

(57) **Abstract**

The present disclosure relates to a charging arrangement (2) in an electrically powered working machine (4) for charging an electric energy storage device (6) of the electrically powered working machine (4). The charging arrangement (2) comprising: an electric machine (8) arranged to generate electric power to charge the electric energy storage device (6), a hydraulic device (10) arranged to generate mechanical power to actuate the electric device (8), and a hydraulic interface (12) fluidly connected, or connectable, to the hydraulic device (10) and fluidly connectable to a hydraulic pressure source (14) external to the electrically powered working machine (4). The charging arrangement (2) is configured to drive the hydraulic device (10) to actuate the electric device (8) to charge the electric energy storage device (6) when the hydraulic interface (12) is fluidly connected to the hydraulic pressure source (14). The disclosure further relates to a method (100) for charging an electric energy storage device (6) of an electrically powered working machine (4), a control unit (22), an electrically powered working machine (4) comprising the charging arrangement (2) and the control unit (22), and a system comprising at least one electrically powered working machine (4) and at least one hydraulic pressure source (14).

## Description

### TECHNICAL FIELD

The disclosure relates to a charging arrangement for charging an electric energy storage device of an electrically powered working machine. The present disclosure also relates to an electrically powered working machine comprising the charging arrangement, a method for charging an electric energy storage device of the electrically powered working machine, a control unit configured to monitor and control a charging operation, a computer readable medium, a computer program and to a system comprising at least one electrically powered working machine.

The disclosure is applicable on electrically powered working machines within the fields of industrial construction machines or construction equipment comprising hydraulic motors.

### BACKGROUND

Today, electrically powered working machines are used as alternatives to conventional diesel-powered working machines to reduce exhaust gas emissions. Similar to electric vehicles, the electrically powered working machines use electric energy stored in batteries to power an electric motor and further to power the working machine. The electrically powered working machines have limited working capacities depending on the batteries and need to be re-charged as the batteries are depleted. One main challenge with the electrically powered working machines is the availability of electric power at work sites and in remote locations for providing charging. Grid power may be limited. Therefore, there is a need for alternative charging solutions.

### SUMMARY

An object of the disclosure is to provide an in at least some aspect improved charging arrangement and method for charging an electric energy storage device of an electrically powered working machine, which makes it possible to charge electric energy storage devices when there is no conventional charging station available. Another object of the disclosure is to provide an electrically powered working machine comprising the charging arrangement, an improved control unit configured to monitor and control a charging operation and an improved system comprising at least one electrically powered working machine and at least one hydraulic pressure source.

According to a first aspect of the present disclosure, the object is at least partly achieved by a charging arrangement according to claim 1. Hence, there is provided a charging arrangement in an electrically powered working machine for charging an electric energy storage device of the electrically powered working machine. The charging arrangement comprises: an electric device arranged to generate electric power to charge the electric energy storage device, a hydraulic device arranged to generate mechanical power to actuate the electric device, and a hydraulic interface fluidly connected, or connectable, to the hydraulic device and fluidly connectable to a hydraulic pressure source external to the electrically powered working machine. The charging arrangement is configured to drive the hydraulic device to actuate the electric device to charge the electric energy storage device when the hydraulic interface is fluidly connected to the hydraulic pressure source.

A hydraulic device is herein to be understood as a hydraulic device which may be used either as a hydraulic pump or as a hydraulic motor of an electrically powered working machine. Likewise, an electric device is to be understood as an electric device which may be used either as an electric motor or as an electric generator. During charging of the electric energy storage device of the electrically powered working machine, hydraulic power from the external pressure source drives the hydraulic device as a hydraulic motor to generate mechanical power. The mechanical power in turn powers the electric device as an electric generator charging the electric energy storage device. During normal operation of the electrically powered working machine, the electric energy of the electric energy storage device drives the electric device as an electric motor to generate mechanical power to drive the hydraulic device as a hydraulic pump to generate hydraulic power, i.e. to provide hydraulic pressure to any hydraulic applications in the electrically powered working machine.

Electrically powered working machines are herein to be understood as electrically powered heavy equipment, such as excavators, dump trucks or wheel loaders. Typically, these machines comprise an electric motor and at least one hydraulic pump for providing hydraulic power and for powering different hydraulic applications of the electrically powered working machine during operation. For example, during normal operation of wheel loaders, the hydraulic power is generated by hydraulic pumps for braking, lifting, or tilting a bucket. In dumper trucks, the hydraulic power is generated by hydraulic pumps for powering a hydraulic actuator for lifting a dumper bed to unload the truck. Any such hydraulic pumps may be utilized as the hydraulic device of the disclosure and applied as hydraulic motors to mechanically actuate the electric device, to be used as an electric generator, to charge the electric energy storage device of the charging arrangement according to the disclosure.

The present disclosure is based on a realization that it is advantageous to utilize an existing electric device and a hydraulic device for charging an energy storage device by simply adding a hydraulic interface to a conventional electrically powered working machine and connecting the interface to a hydraulic pressure source. Specifically, when the hydraulic interface is connected to an external hydraulic pressure source, e.g., a hydraulic pump, the hydraulic fluid will be delivered to the hydraulic device through the hydraulic interface, and thereafter the hydraulic device will act as a hydraulic motor and will convert the hydraulic pressure and hydraulic flow into mechanical energy. The mechanical energy will then be utilized to drive the electric device as an electric generator for generating electricity for charging the electric energy storage device. To summarize, a minimal modification of a conventional electrically powered working machine is provided to enable the aforementioned charging function.

By the provision of a charging arrangement provided with a hydraulic interface which can be connected to any conventional hydraulic pressure source, it is possible to charge the electric energy storage device of the electrically powered working machine when there are no conventional charging stations available at the work site. In other words, it enables charging of electrically powered working machines even at work sites with no/poor connection to a local power grid.

Optionally, the hydraulic interface comprises an inlet for delivering fluid to the hydraulic motor, an outlet for returning fluid to the hydraulic pressure source and a drain for draining excessive fluid. Herein, the hydraulic interface is understood as a standard three-line hydraulic valve connector. The connector is easy to install and enables a reliable connection to any conventional hydraulic pressure sources.

According to a second aspect of the present disclosure, the object is at least partly achieved by a method according to claim 3. Hence, there is provided a method for charging an electric energy storage device of an electrically powered working machine, which electrically powered working machine comprises the charging arrangement according to any one of the embodiments of the first aspect of the disclosure. The method comprises: connecting the hydraulic interface to the hydraulic pressure source external to the electrically powered working machine, driving the hydraulic device to generate mechanical power using hydraulic pressure supplied from the hydraulic pressure source, actuating the electric device to generate electric power using mechanical power generated by the hydraulic motor, and charging the electric energy storage device using electric power generated by the electric device.

Optionally, the method further comprises starting a charging operation when the hydraulic interface and the hydraulic pressure source is in a connected state by starting a hydraulic pressure supply from the hydraulic pressure source, and terminating the charging operation when the electric energy storage device is sufficiently charged, such as when it is charged to 50%-100% of its capacity, more preferably to 60%-95%, and most preferably to 75%-90%, by terminating the hydraulic pressure supply from the hydraulic pressure source,

Advantages and advantageous features of the disclosed method largely correspond to those described in connection with the charging arrangement according to the first aspect of the disclosure.

According to a third aspect of the present disclosure, the object is at least partly achieved by a control unit according to claim 5. Hence, there is provided a control unit configured to monitor and control a charging operation according to the method of any one of the embodiments of the second aspect of the disclosure.

Optionally, the control unit comprises a sensor unit for detecting a connected and/or a disconnected state of the hydraulic interface and the hydraulic pressure source. After the connected state is detected the control unit starts the charging operation, either automatically or after manual confirmation by an operator.

Optionally, the control unit comprises a navigation unit and a communication unit. The navigation unit may provide locations of any available hydraulic pressure sources and the communication unit may send a charging request to the hydraulic pressure source. After the request is accepted by the hydraulic pressure source, the navigation unit may guide the electrically powered working machine to a charging location where the hydraulic pressure source is located.

Optionally, the control unit is configured to obtain a state of charge (SoC) level of the electric energy storage device. The control unit may obtain a real-time state of charge level of the electric energy storage device, such that when the electric energy storage device is sufficiently charged, for example when it is charged to 50%-100% of its capacity, more preferably to 60%-95%, and most preferably to 75%-90%, the charging operation is terminated.

According to a fourth aspect of the present disclosure, the object is at least partly achieved by an electrically powered working machine according to claim 9. Hence there is provided an electrically powered working machine comprising the charging arrangement and the control unit according to any one of the embodiments of the first and the third aspect of the disclosure. As mentioned above, electrically powered working machines refer to electrically powered heavy equipment, such as excavators, dump trucks or wheel loaders. These electrically powered working machines typically have an electric motor and at least one hydraulic pump for providing hydraulic power and for powering different hydraulic applications of the electrically powered working machine during operation.

Optionally, the electric device is powered by the electric energy storage device and is configured to drive the hydraulic device during operation of the electrically powered working machine. Specifically, during normal operation, the electric device is used as an electric motor powered by the electric energy storage device and is configured to drive the hydraulic device as a hydraulic pump. In other words, the power flow originates from the electric energy storage device and eventually the power is delivered to the hydraulic device of the hydraulic system. This is opposite to the power flow during the charging operation.

The present disclosure utilizes existing components in conventional electrically powered working machines, and by adding a hydraulic interface and connecting the hydraulic interface to an external hydraulic pressure source, the power flow is reversed, and power is transferred from the hydraulic pressure source and is converted to mechanical power, which is further converted to electrical energy to charge the electric energy storage device.

According to a fifth aspect of the present disclosure, the object is at least partly achieved by a computer program according to claim 11. Hence, there is provided a computer program comprising program code for performing, when executed by the control unit according to any one of the embodiments of the third aspect of the present disclosure, the method according to any one of the embodiments of the second aspect of the present disclosure. The control unit may comprise processing circuitry which is adapted to run the computer program.

According to a sixth aspect of the present disclosure, the object is at least partly achieved by a non-transitory computer-readable storage medium according to claim 12. Hence, there is provided a non-transitory computer-readable storage medium comprising instructions, which when executed by the control unit according to any one of the embodiments of the third aspect of the present disclosure, cause the control unit to perform the method according to any one of the embodiments of the second aspect of the present disclosure.

According to a seventh aspect of the present disclosure, the object is at least partly achieved by a system according to claim 13. Hence, there is provided a system comprising at least one electrically powered working machine according to any one of the embodiments of the fourth aspect of the present disclosure and at least one hydraulic pressure source fluidly connectable to the hydraulic interface of the electrically powered working machine.

Optionally, the hydraulic pressure source is an industrial hydraulic machine or a hydraulic pump.

Optionally, the hydraulic pressure source is a second working machine. The second working machine may have a compatible hydraulic interface, and can be connected to the hydraulic interface of the electrically powered working machine to provide hydraulic fluid for charging the electric energy storage device. A machine-to-machine charging is thereby established. This is particularly beneficial when the electrically powered working machine is out of power at the work site without access to, or unable to reach, stationary hydraulic pressure sources. A working machine that is nearby can be called to the position of the depleted working machine and be used as the hydraulic pressure source and thereby solve the problem.

Further advantages and advantageous features of the invention are disclosed in the following description and in the dependent claims.

### BRIEF DESCRIPTION OF THE DRAWINGS

With reference to the appended drawings, below follows a more detailed description of embodiments of the disclosure cited as examples.

In the drawings:
Fig. 1 is a schematic side view of an exemplary electrically powered working machine comprising a charging arrangement according to an aspect of the disclosure;
Fig. 2 is a diagram illustrating an exemplary charging arrangement for charging an electric energy storage device of the electrically powered working machine shown in fig. 1;
Fig. 3 is a schematic view illustrating a system comprising one electrically powered working machine and one hydraulic pressure source fluidly connectable to the hydraulic interface of the electrically powered working machine according to an aspect of the disclosure.
Fig. 4 is a flow chart illustrating a charging method according to an aspect of the disclosure.
Fig. 5 is a schematic view illustrating an example of a hydraulic pressure source being a second working machine.

### DETAILED DESCRIPTION OF EXAMPLE EMBODIMENTS OF THE DISCLOSURE

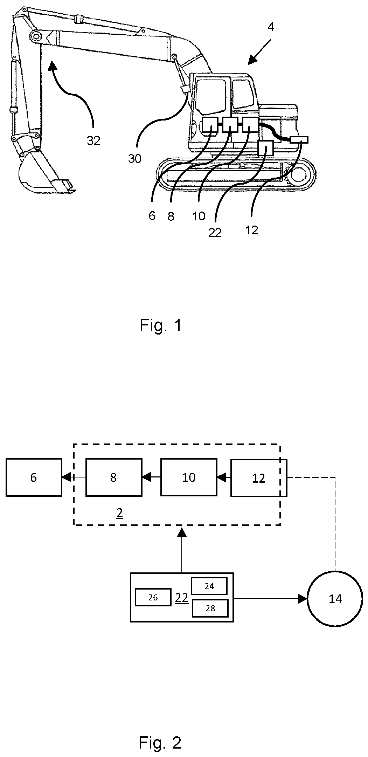

**Fig.** 1 depicts an electrically powered working machine 4 according to an aspect of the disclosure. The working machine 4 is exemplified by an excavator. Even though an electrically powered excavator 4 is shown, it shall be noted that the disclosure is not limited to this type of working machine, and an electrically powered working machine may also be used in other electrically powered working machines comprising hydraulic motors, such as articulated haulers, wheel loaders or backhoe loaders.

The electrically powered working machine 4 comprises a charging arrangement 2 according to an aspect of the disclosure, and an electric energy storage device 6, which may comprise one or more batteries for storing electric power. The electric energy is used for powering an electric device 8, which in turn powers a hydraulic device 10 for creating a propulsion force and for energizing other hydraulic implements such as brakes and/or lifting or tilting buckets in the electrically powered working machine 4. The electric energy may also be used for directly powering electric consumers (not shown) of the electrically powered working machine 4. The electrically powered working machine 4 thus comprises the electric device 8, the hydraulic device 10 and a hydraulic interface 12.

During normal operation when the electrically powered working machine 4 is performing a task at a work site, for example, excavation of a mineral and loading of the mineral onto a dump truck, the electric device 8 will drive the hydraulic device 10 which will further actuate at least one cylinder rod 30 to move and thereby drive a work implement 32 for performing the excavation operation. During normal operation, the electrically powered working machine 4 and the electric device 8 are powered by the electric energy storage device 6.

The electrically powered working machine 4 may further comprise a control unit 22, configured to monitor and control a charging operation according to an aspect of the disclosure.

Fig. 2 illustrates a charging arrangement 2. The charging arrangement 2 comprises standard components of a conventional electrically powered working machine, including the electric device 8 and the hydraulic device 10. The charging arrangement 2 further comprises the hydraulic interface 12. During a charging operation, the hydraulic interface 12 will be fluidly connected to a hydraulic pressure source 14 external to the electrically powered working machine 4, e.g. a hydraulic pump. Upon the establishment of the fluid connection, hydraulic fluid, typically hydraulic oil, will be delivered from the hydraulic pressure source 14 to an inlet (not shown) of the hydraulic interface 12 via a fluid delivery conduit 16a. The hydraulic fluid will further be delivered to the hydraulic device 10 and drive the hydraulic device 10 to generate mechanical energy. The generated mechanical energy will be utilized to drive the electric device 8 for generating electricity and to charge the electric energy storage device 6. The hydraulic fluid will then return to the hydraulic pressure source 14 via a fluid return line 18a. Excessive fluid will be guided to a drain 20 through a separate line.

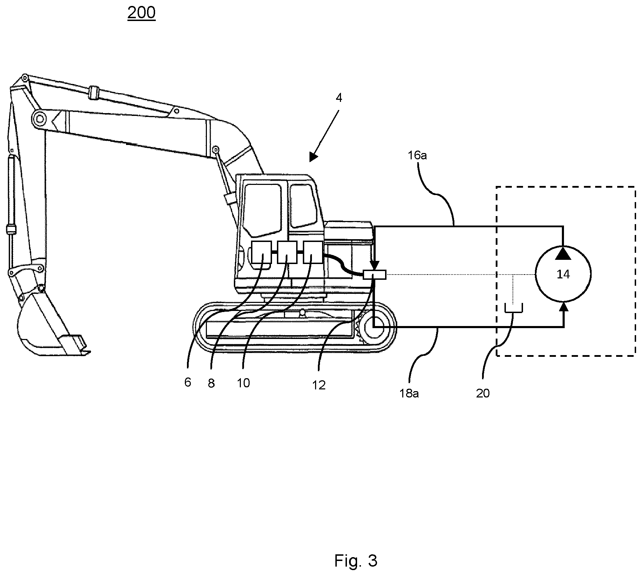

Fig. 3 illustrates a system 200 comprising at least one electrically powered working machine 4 and at least one hydraulic pressure source 14 fluidly connectable to the hydraulic interface 12 of the electrically powered working machine. The hydraulic pressure source 14 may be an industrial hydraulic machine, a hydraulic pump or a second working machine 34.

The hydraulic interface 12 comprises an inlet 16 for delivering fluid to the hydraulic device 10, an outlet 18 for returning fluid to the hydraulic pressure source 14 and a drain 20 for draining excessive fluid. It is easy to install and can enable a reliable connection to any standard hydraulic pressure sources.

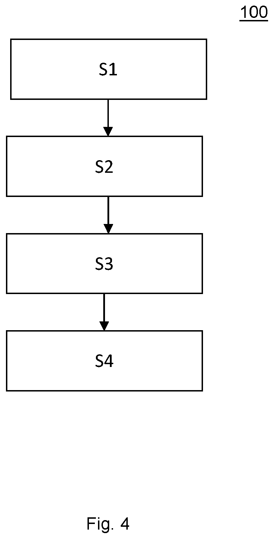

Fig. 4 illustrates a method 100 for charging an electric energy storage device 6 of the electrically powered working machine 4, such as the excavator 4 shown in Fig. 1 which comprises the charging arrangement 2 described above. The method 100 comprises the following steps: connecting S1 the hydraulic interface 12 to the hydraulic pressure source 14 external to the electrically powered working machine 4, driving S2 the hydraulic device 10 to generate mechanical power using hydraulic pressure supplied from the hydraulic pressure source 14, actuating S3 the electric device 8 to generate electric power using mechanical power generated by the hydraulic device 10, and charging S4 the electric energy storage device 6 using electric power generated by the electric device 8.

When the electric energy storage device 6 is in a low-power state at a work site with no electric charging station available nearby, a navigation unit 26 of the control unit 22 may identify any available hydraulic pressure sources and a charging request may be sent to the hydraulic pressure source 14 by a communication unit 28. After the request is accepted by the hydraulic pressure source 14, the navigation unit 26 may guide the electrically powered machine 4 to a charging location where the hydraulic pressure source 14 is located. To initiate the charging operation, the first step is to fluidly connect the hydraulic interface 12 to the hydraulic pressure source 14. A sensor unit 24 may be arranged to detect a connected and/or a disconnected state of the hydraulic interface 12 and the hydraulic pressure source 14. When the hydraulic interface 12 and the hydraulic pressure source 14 are in a connected state, the control unit 22 may start the charging operation either automatically or after manual confirmation by an operator.

Once the charging operation is started, the hydraulic fluid will be delivered from the hydraulic pressure source 14 to the hydraulic interface 12, and further to the hydraulic device 10 of the electrically powered working machine 4. Thereafter, the hydraulic pressure and hydraulic fluid flow will drive the hydraulic device to generate mechanical power.

The next step is to actuate the electric device 8, by using the mechanical power generated in step 2, so that electric power will be generated. The generated electric power is used to charge the electric energy storage device 6.

During the charging operation, the communication unit 28 of the control unit 22 may communicate continuously or intermittently with the electric energy storage device 6 and obtain a state of charge (SoC) level of the electric energy storage device 6. When the electrical energy storage device 6 is sufficiently charged, for example when it is charged to 50%-100% of its capacity, more preferably to 60%-95%, most preferably to 75%-90%, the control unit 22 may terminate the charging operation automatically. Alternatively, the charging operation may be terminated manually by an operator.

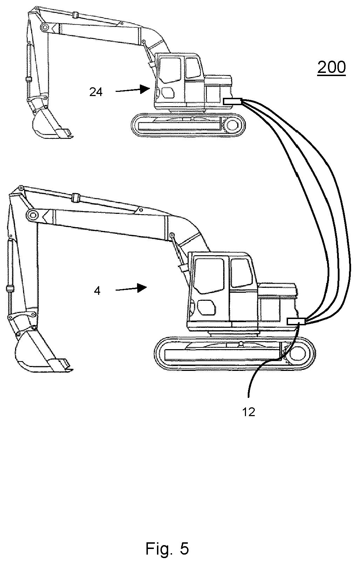

Fig. 5 illustrates an example embodiment when the hydraulic pressure source is a second working machine 34

When the electrically powered working machine 4 is out of power at the work site without access to, or unable to reach, any stationary hydraulic machines or hydraulic pumps, a second working machine 34 may be used as the hydraulic pressure source. For example, when the electric energy storage device 6 of the electrically powered working machine 4 is in a low-power state, the control unit 22 may send a charging request including its own location to a nearby second working machine 34 capable of providing sufficient hydraulic fluid pressure. After receiving a confirmation from the second working machine 34, the electrically powered working machine 4 may respond to the confirmation and wait for the second working machine 34 to arrive at its location The second working machine 34, having a compatible hydraulic interface, will be connected to the hydraulic interface 12 of the electrically powered working machine 4 to provide hydraulic pressure and to charge the electric energy storage device 6 using the method 100 described above.

It is to be understood that the present disclosure is not limited to the embodiments described above and illustrated in the drawings; rather, the skilled person will recognize that many changes and modifications may be made within the scope of the appended claims.

## Claims

1. A charging arrangement (2) in an electrically powered working machine (4) for charging an electric energy storage device (6) of the electrically powered working machine (4), the charging arrangement (2) comprising:
- an electric device (8) arranged to generate electric power to charge the electric energy storage device (6),
- a hydraulic device (10) arranged to generate mechanical power to actuate the electric device (8), and
- a hydraulic interface (12) fluidly connected, or connectable, to the hydraulic device (10) and fluidly connectable to a hydraulic pressure source (14) external to the electrically powered working machine (4),
wherein the charging arrangement (2) is configured to drive the hydraulic device (10) to actuate the electric device (8) to charge the electric energy storage device (6) when the hydraulic interface (12) is fluidly connected to the hydraulic pressure source (14).

2. The charging arrangement according to claim 1, wherein the hydraulic interface (12) comprises an inlet (16) for delivering fluid to the hydraulic device (10), an outlet (18) for returning fluid to the hydraulic pressure source (14) and a drain (20) for draining excessive fluid.

3. A method (100) for charging an electric energy storage device (6) of an electrically powered working machine (4), which electrically powered working machine (4) comprises the charging arrangement (2) according to any one of the claims 1-2, the method (100) comprising:
- connecting (S1) the hydraulic interface (12) to the hydraulic pressure source (14) external to the electrically powered working machine (4),
- driving (S2) the hydraulic device (10) to generate mechanical power using hydraulic pressure supplied from the hydraulic pressure source (14),
- actuating (S3) the electric device (8) to generate electric power using mechanical power generated by the hydraulic device (10), and
- charging (S4) the electric energy storage device (6) using electric power generated by the electric device (8).

4. The method (100) according to claim 3, wherein the method (100) further comprises starting a charging operation when the hydraulic interface (12) and the hydraulic pressure source (14) is in a connected state by starting a hydraulic pressure supply from the hydraulic pressure source (14), and terminating the charging operation when the electric energy storage device (6) is sufficiently charged by terminating the hydraulic pressure supply from the hydraulic pressure source (14).

5. A control unit (22) configured to monitor and control a charging operation according to the method (100) of any one of the claims 3-4.

6. The control unit (22) according to claim 5, wherein the control unit (22) comprises a sensor unit (24) for detecting a connected and/or a disconnected state of the hydraulic interface (12) and the hydraulic pressure source (14).

7. The control unit (22) according to any one of the claims 5-6, wherein the control unit (22) further comprises a navigation unit (26) and a communication unit (28).

8. The control unit (22) according to any one of the claims 5-7, wherein the control unit (22) is further configured to obtain a state of charge level of the electric energy storage device (6).

9. An electrically powered working machine (4) comprising the charging arrangement (2) according to any one of the claims 1 or 2 and the control unit according to any one of the claims 5-8.

10. The electrically powered working machine (4) according to claim 9, wherein the electric device (8) is powered by the electric energy storage device (6) and is configured to drive the hydraulic device (10) during operation of the electrically powered working machine (4).

11. A computer program product comprising program code for performing, when executed by the control unit (22), the method (100) according to any one of the claims 3-4.

12. A non-transitory computer-readable storage medium comprising instructions, which when executed by the control unit (22), cause the control unit (22) to perform the method (100) according to any one of the claims 3-4.

13. A system (200) comprising at least one electrically powered working machine (4) according to any one of the claims 9 or 10 and at least one hydraulic pressure source (14) fluidly connectable to the hydraulic interface (12) of the electrically powered working machine (4).

14. The system (200) according to claim 13, wherein the hydraulic pressure source (14) is an industrial hydraulic machine or a hydraulic pump.

15. The system (200) according to claim13, wherein the hydraulic pressure source (14) is a second working machine (34).
